(19) Europäisches Patentamt
European Patent Office
Office européen des brevets

(11) Publication number: **0 086 920**
**B1**

(12) # EUROPEAN PATENT SPECIFICATION

(45) Date of publication of patent specification: **19.02.86**

(51) Int. Cl.$^4$: **C 08 G 69/00,** C 08 G 69/08

(21) Application number: **82306964.6**

(22) Date of filing: **24.12.82**

(54) **Catalysts useful for preparing polyamides.**

(30) Priority: **04.01.82 US 336545**

(43) Date of publication of application:
**31.08.83 Bulletin 83/35**

(45) Publication of the grant of the patent:
**19.02.86 Bulletin 86/08**

(84) Designated Contracting States:
**BE CH DE FR GB IT LI LU NL SE**

(56) References cited:
**DE-B-1 595 286**
**GB-A-1 141 059**
**US-A-3 422 081**
**US-A-4 283 524**

**Chemical Abstracts vol. 75, no. 12, 20 September 1971, Columbus, Ohio, USA H. KOTHANDARAMAN et al. "Polymerization of acrylamide and acrylic acid photo-initiated by diazidotetraamminecobalt (III) azide" page 5, abstract no. 77344w**

(73) Proprietor: **THE STANDARD OIL COMPANY**
**Midland Building**
**Cleveland, Ohio 44115 (US)**

(72) Inventor: **Wu, Muyen Michael**
**2425 17th Street**
**Cuyahoga Falls Ohio 44223 (US)**
Inventor: **Coffey, Gerald Paul**
**5264 Ashwood Drive**
**Lyndhurst Ohio 44124 (US)**
Inventor: **Ball, Lawrence Ernest**
**1824 Joan of Arc Circle**
**Cuyahoga Falls Ohio 44331 (US)**

(74) Representative: **Smith, Sydney et al**
**Elkington and Fife High Holborn House 52/54**
**High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 086 920 B1

**Description**

This invention relates to new catalysts useful for the preparation of polyamides. More particularly, this invention relates to the polymerization of at least one of an alpha, beta unsaturated carboxylic acid and ammonia, an ammonium salt of an alpha, beta unsaturated carboxylic acid, an alpha, beta unsaturated nitrile and water, a beta-amino propionic acid or its alkyl derivatives and an alpha beta unsaturated amide and ammonia in the presence of a catalyst comprising a pentaamine cobalt (III) complex.

It is known that polyamides can be prepared from various monomers. For example, U.S. Patent 4,283,524 describes a process wherein polyamides are prepared from the ammonium salts of alpha, beta unsaturated monocarboxylic acids. U.S. Patent 2,691,643 teaches that polyamides can be prepared by the thermal condensation of beta-amino propionic acid. U.S. Patents 3,629,203 and 3,499,879 relate to the preparation of polyamides by the condensation reaction of acrylonitrile. U.S. Patent 2,749,331 teaches that polyamides can be prepared from acrylamide. However, each of these processes is deficient in that the polymide produced has very low molecular weight.

It is an object of this invention to provide a novel catalytic process to produce polyamides which have a high degree of polymerization. Moreover, by using a catalyst system in the reaction, the rate of the polymerization reaction is remarkably increased and the reaction period is greatly shortened.

Summary of the invention

It has now been discovered that a polyamide can be produced by polymerizing at least one of an alpha, beta unsaturated carboxylic acid and ammonia, an ammonium salt of an alpha, beta unsaturated carboxylic acid, an alpha, beta unsaturated nitrile and water, beta-amino propionic acid or alkyl derivatives thereof and an alpha, beta unsaturated amide and ammonia in the presence of a catalyst comprising a pentaamine cobalt (III) complex.

Detailed description

The polymer

The polyamides obtained by the process of this invention are characterized as containing ethylene amido linkages in the polymer backbone. These ethylene amido linkages are generally defined as having repeating units as follows:

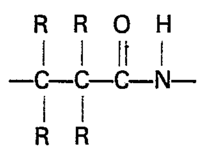

wherein each R is a suitable substituent which, in the simplest embodiment of the invention, would all be hydrogen. The ethylene amido linkages are preferably defined as having repeating units of the structure:

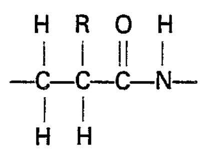

in which R is an alkyl group preferably methyl. These ethylene amido linkages comprise the basic structure of a nylon-3 type polyamide.

These polyamides may also contain other carbonamide structural units. The carbonamide structural unit will vary depending on the particular monomer or monomers used in the polymerization. For example, the carbonamide unit may comprise a nylon-6 type unit which has the following formula:

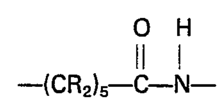

wherein each R is a suitable substituent which, in the simplest embodiment of the invention, would all be hydrogen. Other carbonamide units such as nylon-4 precursors, nylon-11 precursors, nylon-6,6 precursors, nylon-6,10 precursors, nylon-7 precursors, nylon-8 precursors and nylon-12 precursors may be contained in the polyamide of this invention. The properties of the resultant polyamide will depend on the type of monomer or monomers used and the ratio of the various monomers.

While this invention is directed principally to polyamides, it also includes within its ambit polyamides the polymer chains of which are formed from the above units together with other units which may be introduced into the chain, for example, by adding suitable copolymerizable monomers to the polymerization mixture.

The process

The formation of polyamides from alpha, beta unsaturated carboxylic acid and ammonia, ammonium salt of an alpha, beta unsaturated carboxylic acid, an alpha, beta unsaturated nitrile and water, a beta-amino propionic acid or alkyl derivatives thereof and an alpha, beta unsaturated amide and ammonia are all known. Examples of carboxylic acids which are within the scope of this invention include acrylic acid, methacrylic acid and crotonic acid. Examples of ammonium salts of alpha, beta unsaturated carboxylic acids which are included within the scope of this invention are ammonium acrylate, ammonium methacrylate and ammonium crotonate. Examples of alpha, beta unsaturated nitriles which are within the scope of this invention include acrylonitrile and methacrylonitrile. Examples of beta-amino propionic acid or alkyl derivatives thereof which are within the scope of this invention include beta-alanine and alpha-methyl-beta-alanine. Examples of alpha, beta unsaturated amides that are within the scope of this invention include acrylamide and methacrylamide. Each of these reactions is well known in the art.

This polymerization can be conducted under a broad range of process conditions which are generally known in the prior art. In the preferred practice of the invention, monomer or monomers are maintained at a temperature above their melting points but below the decomposition temperature of the products. It is generally preferred to conduct the process at a temperature between 100° and 300°C, and conducting the process between 135° and 200°C is most preferred.

The temperature and amount of time required for polymerization are interrelated. At low temperatures it will take longer for a polymer to form than at high temperatures. In general, the reaction is conducted in less than 48 hours, with times ranging from 2 to 20 hours normally being adequate to produce the polyamide.

Although this polymerization can take place in an open container in contact with the atmosphere, it is preferred to carry out the polymerization in the absence of oxygen. This can be achieved by blanketing the reaction mixture with either an inert gas such as nitrogen or with a gaseous monomer, e.g. ammonia.

This reaction can proceed at atmospheric, superatmospheric or subatmospheric pressure. Normally, sufficient pressure is required to maintain the volatile ingredients in the liquid state under the polymerization conditions and to control the concentration of gaseous ingredients. Thus, the polymerization normally takes place under superatmospheric pressure. After the polymerization has proceeded for a suitable time, the pressure can be lowered to pull off water and other volatiles.

Another important factor in the conduct of the polymerization is the extent to which the reactants are able to physically contact each other so that the desired reaction can occur. Various solvents and liquid dispersions are helpful in improving the contacting. It has also been found that ammonia and/or water can be added to improve the conversion of the monomers to high molecular weight polymer.

This polymerization process can proceed by any of the generally known modes of polymerization including bulk, slurry, suspension or solution polymerization by batch, continuous or intermittent addition of the monomers and other components. The polyamides produced have a wide variety of applications. Generally, they may be used in any application calling for a nylon type polymer. For example, these polyamides can be used as fibers, plastics, films and molding resins.

The catalyst

The catalyst useful in the inventive process comprises a pentaamine cobalt (III) complex. This catalyst can be represented by the following formula:

$$[(NH_3)_5CoX]Y$$

wherein X and Y are suitable ligands. Ligands which can replace X in the above structure include carbanato, aquo, acetato, thiocyanato, maleato, fluoro, chloro, bromo, iodo, pyridine, imidazoleo, dimethyl formamide, acetoxyaceto, cyclopropanecarboxylato, oxydiacetato, acetylene carboxylato, pyridine carboxylato, o-aminobenzoato and formato. Ligands which can replace Y in the above structure include $NO_3$, $ClO_4$ and Cl. These complexes and methods for preparing them are well known in the art.

The catalyst described above can be used in any amount which will catalyze the reaction. Preferably, catalyst concentrations between 0.01 to 5.0 mole percent, based on the amount of monomer in the reaction, can be used. It is especially preferred to use between 0.05 and 1.0 mole percent catalyst.

Specific embodiments

In order to provide a better understanding of the present invention, the following working examples are presented.

Comparative Examples A

Ammonium methacrylate was added to a 25 ml closed glass ampoule. The ampoule was evacuated and repressurized three times and then sealed with a flame. The ampoule was then placed in an oven at 175°C for 16 hours, cooled and opened carefully. The crude polymer obtained was dissolved in 20 ml of formic acid and then precipitated out in 800 ml of acetone. The precipitant was leached with 400 ml of boiling water to get rid of any catalyst residue. The polymer was identified by NMR spectroscopy. The results are shown in Table I.

Examples 1 thru 9

The procedure outlined in Comparative Example A was followed except that various molar amounts of catalyst (based on the moles of ammonium methacrylate) were added to the reaction system. The results are also shown in Table I.

TABLE I

Monomer: Ammonium methacrylate
Temp.: 175°C
Time: 16 hours.

| Exam | Catalyst | Cat mole % | Product composit. | Intrin. viscosity (dl/g)(1) |
|---|---|---|---|---|
| A | None | — | Polyamide | 0.11 |
| 1 | $[(NH_3)_5CoCO_3]NO_3$ | 0.1 | Polyamide | 0.46 |
| 2 | $[(NH_3)_5CoCO_3]NO_3$ | 0.5 | Polyamide | 0.49 |
| 3 | $[(NH_3)_5CoH_2O](NO_3)_3$ | 0.1 | Polyamide | 0.53 |
| 4 | $[(NH_3)_5CoH_2O](NO_3)_3$ | 0.5 | Polyamide | 0.52 |
| 5 | 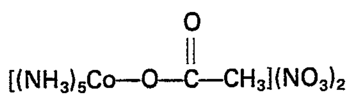 | 0.1 | Polyamide | 0.58 |
| 6 | 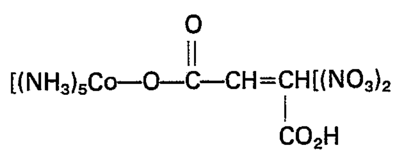 | 0.1 | Polyamide | 0.68 |
| 7 | 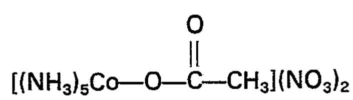 | 0.5 | Polyamide | 0.42 |
| 8 | $[(NH_3)_5CoF](ClO_4)_2$ | 0.1 | Polyamide | 0.58 |
| 9 | $[(NH_3)_5CoCO_3]Cl$ | 0.1 | Polyamide | 0.62 |

(1) Determined in 90% formic acid solution at 25°C.

Comparative Example B

The experimental procedure in Comparative Example A was followed except that ammonium acrylate was used instead of ammonium methacrylate. The results are shown in Table II.

Example 10

The procedure described in Comparative Example B was followed except that a catalyst was added. The results are also shown in Table II.

TABLE II

Monomer: Ammonium acrylate
Temp.: 175°C
Time: 16 hours

| Exam | Catalyst | Cat mole % | Product composit. | Intrin. viscosity (dl/g)(1) |
|---|---|---|---|---|
| B | None | — | Polyamide | 0.15 |
| 10 | $[(NH_3)_5CoCO_3]NO_3$ | 0.1 | Polyamide | 0.31 |

(1) Determined in 90% formic acid at 25°C.

Comparative Example C

The procedure described in Comparative Example A was followed except that the reaction time was 24 hours and the reactants were acrylonitrile, methacrylonitrile and water. The polymer was dried in a vacuum oven at 60°C for 16 hours and then water extracted overnight. The water insoluble polymer was dried in a vacuum oven overnight also.

Example 11

The procedure described in Comparative Example C was followed except that a catalyst was added. The results are shown in Table III.

TABLE III

Reactants: Acrylonitrile/methacrylonitrile/water
Temp.: 175°C
Time: 24 hours

| Exam | Catalyst | Cat mole % | Product composit. | Conv. (%)(1) | Water insolubility (%)(2) |
|---|---|---|---|---|---|
| C | None | — | Copolyamide | 0 | 0 |
| 11 | $[(NH_3)_5CoCO_3]NO_3$ | 1 | Copolyamide | 52 | 8.0 |

(1) $\text{Conversion}=\dfrac{\text{Reactants (gms) converted to products}}{\text{Total reactants (gms)}}$

(2) $\text{Water insolubility}=\dfrac{\text{Insoluble polyamide (g)}}{\text{Total polyamide (g)}}$

Examples 12 and 13

The procedure described in Comparative Example A was followed except that the monomers comprise ammonium methacrylate and caprolactam. The results are shown in Table IV.

TABLE IV

Reactants: Ammonium methacrylate/caprolactam
Temp.: 175°C
Time: 16 hours

| Exam | Catalyst | Cat mole % | Product composit. | Intrin. viscosity (dl/g)(1) |
|---|---|---|---|---|
| 12 | $[(NH_3)_5CoCO_3]NO_3$ | 1.0 | Copolyamide | 0.32 |
| 13 | $[(NH_3)_5CoCO_3]NO_3$ | 0.1 | Copolyamide | 0.77 |

(1) Determined in 90% formic acid at 25°C.

**Claims**

1. A process for preparing a polyamide containing ethylene amido linkages comprising polymerizing at least one of an alpha, beta unsaturated carboxylic acid and ammonia, an ammonium salt of an alpha, beta unsaturated carboxylic acid, an alpha, beta unsaturated nitrile and water, beta-amino propionic acid or alkyl derivatives thereof and an alpha, beta unsaturated amide and ammonia in the presence of a catalyst comprising a pentaamine cobalt (III) complex.

2. The process of claim 1 wherein the catalyst has the following formula:

$$[(NH_3)_5CoX]Y$$

wherein X and Y are ligands.

3. The process of claim 2 wherein X is selected from

$—CO_3$, 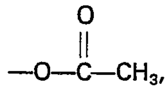, 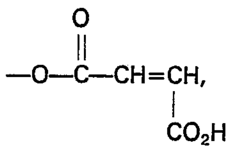 and —F.

4. The process of claim 2 wherein Y is selected from $—NO_3$ and —Cl.

5. The process of claim 1 wherein an alpha, beta unsaturated carboxylic acid and ammonia is polymerized.

6. The process of claim 1 wherein an ammonium salt of an alpha, beta unsaturated carboxylic acid is polymerized.

7. The process of claim 1 wherein an alpha, beta unsaturated nitrile and water is polymerized.

8. The process of claim 1 wherein an alpha, beta unsaturated amide and ammonia is polymerized.

9. The process of claim 1 wherein a beta-amino propionic acid or alkyl derivative thereof is polymerized.

10. The process of claim 1 wherein the polyamide contains ethylene amido linkages of the following structure:

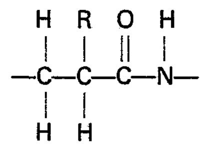

wherein R is an alkyl group.

11. The process of claim 10 wherein R is methyl.

**Patentansprüche**

1. Verfahren zum Herstellen eines Ethylen-Amido-Bindungen enthaltenden Polyamids, dadurch gekennzeichnet, daß wenigstens eines von einer α,β ungesättigten Carboxylsäure und Ammoniak, einem Ammoniaksalz einer α,β ungesättigten Carboxylsäure, einem α,β ungesättigten Nitril und Wasser, β Amino-Propionsäure oder deren Alkylderivate und ein α,β ungesättigtes Amid und Ammoniak in Gegenwart eines einen Penta-Ammin-Kobalt-(III)-Komplex enthaltenden Katalysators polymerisiert wird.

2. Verfahren nach Anspruch 1, dadurch gekennzeichnet, daß der Katalysator folgende Formel hat:

$$[(NH_3)_5CoX]Y$$

wobei X und Y ligande sind.

3. Verfahren nach Anspruch 2, dadurch gekennzeichnet, daß X ausgewählt ist aus

$—CO_3$, 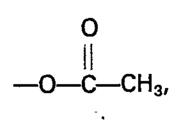, 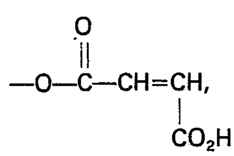 und —F.

4. Verfahren nach Anspruch 2, dadurch gekennzeichnet, daß Y von $—NO_3$ und —Cl ausgewählt wird.

5. Verfahren nach Anspruch 1, dadurch gekennzeichnet, daß eine α,β ungesättigte Carboxylsäure und Ammoniak polymerisiert werden.

6. Verfahren nach Anspruch 1, dadurch gekennzeichnet, daß ein Ammoniaksalz einer α,β ungesättigten Carboxylsäure polymerisiert wird.

7. Verfahren nach Anspruch 1, dadurch gekennzeichnet, daß ein α,β ungesättigtes Nitril und Wasser polymerisiert werden.

8. Verfahren nach Anspruch 1, dadurch gekennzeichnet, daß ein α,β ungesättigtes Amid und Ammoniak polymerisiert werden.

9. Verfahren nach Anspruch 1, dadurch gekennzeichnet, daß eine β Amino-Propionsäure oder ein Alkylderivat derselben polymerisiert wird.

10. Verfahren nach Anspruch 1, dadurch gekennzeichnet, daß das Polyamid Ethylenamidobindungen folgenden Aufbaus enthält:

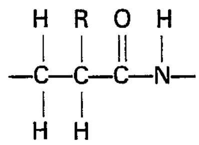

wobei R eine Alkylgruppe ist.

11. Verfahren nach Anspruch 10, dadurch gekennzeichnet, daß R Methyl ist.

## Revendications

1. Procédé de préparation d'un polyamide contenant des liaisons éthylène amido, consistant à polymériser au moins l'un parmi un acide carboxylique alpha, bêta insaturé et l'ammoniac un sel d'ammonium d'un acide carboxylique alpha, bêta insaturé, un nitrile alpha, bêta insaturé et l'eau, l'acide bêta-amino propionique ou ses dérivés alkylés et un amide alpha, bêta insaturé et l'ammoniac, en présence d'un catalyseur comprenant un complexe de pentaammine cobalt (III).

2. Procédé selon la revendication 1, dans lequel le catalyseur répond à la formule suivante:

$$[(NH_3)_5CoX]Y$$

dans laquelle X et Y sont des ligands.

3. Procédé selon la revendication 2, dans lequel X est choisi parmi

$-CO_3$ 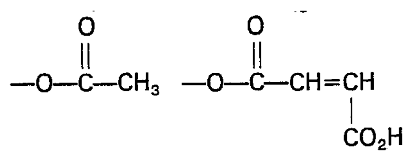 et —F.

4. Procédé selon la revendication 2, dans lequel Y est choisi parmi $-NO_3$ et —Cl.

5. Procédé selon la revendication 1, dans lequel on polymérise un acide carboxylique alpha, bêta insaturé et l'ammoniac.

6. Procédé selon la revendication 1, dans lequel on polymérise un sel d'ammonium d'un acide carboxylique alpha, bêta insaturé.

7. Procédé selon la revendication 1, dans lequel on polymèrise un nitrile alpha, bêta insaturé et l'eau.

8. Procédé selon la revendication 1, dans lequel on polymérise un amide alpha, bêta insaturé et l'ammoniac.

9. Procédé selon la revendication 1, dans lequel on polymérise l'acide bêta-amino propionique ou ses dérivés alkylés.

10. Procédé selon la revendication 1, dans lequel le polyamide contient des liaisons éthylène amido ayant la structure suivante:

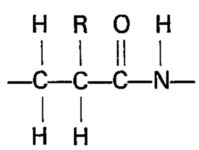

dans lequel R est un groupe alkyle.

11. Procédé selon la revendication 10, dans lequel R est un groupe méthyle.